# EUROPÄISCHE PATENTSCHRIFT

(11) **EP 2 915 754 B1**
(45) Veröffentlichungstag und Bekanntmachung des Hinweises auf die Patenterteilung: **16.10.2019**
(21) Anmeldenummer: 15000538.7
(22) Anmeldetag: 25.02.2015
(51) Int. Cl.: B64G 1/66, B64G 1/26

(54) **Vorrichtung zum Halten und Ausrichten einer Nutzkomponente, insbesondere einer Raumfahrtkomponente**
Device for holding and orientating a payload component, in particular a spaceborne component
Dispositif de retenue et d'alignement d'une charge utile, en particulier un composant spatial

(30) Priorität: 03.03.2014 DE 102014002732
(43) Veröffentlichungstag der Anmeldung: 09.09.2015
(73) Patentinhaber: Airbus Defence and Space GmbH, 82024 Taufkirchen (DE)
(72) Erfinder: Häberlein, Matti, D-88079 Kressbronn (DE)
(74) Vertreter: Schicker, Silvia

(56) Entgegenhaltungen:
- WO-A1-2011/104518
- JP-A- H05 104 475
- US-A- 4 060 315
- US-A- 5 239 361
- US-A1- 2001 022 688
- US-A1- 2014 055 630

## Beschreibung

Die Erfindung betrifft eine Vorrichtung zum Halten und Ausrichten einer Nutzkomponente, insbesondere eines optischen Elements oder einer elektrischen oder chemischen Schubdüse.

Eine solche Vorrichtung wird in der Raumfahrt zum Stellen und Regeln sog. Tip/Tilt und Fokus-Positionen, z.B. von Schubdüsen oder optischen Elementen, verwendet. Das Verstellen erfolgt beispielsweise mit Hilfe von Schrittmotoren. Die Position eines jeweiligen Schrittmotors wird durch zusätzliche, in der Regel optische, Sensoren bestimmt. Je nach Anzahl der erforderlichen Schrittmotoren, ggf. notwendigen Getriebe und deren Aufhängungen kann eine derartige Vorrichtung zum Halten und Ausrichten ein signifikantes Gewicht haben. Die Steuerung, die Skalierbarkeit und die Adaptionsmöglichkeiten für unterschiedliche Systeme sind entsprechend komplex. Dadurch sind derartige Vorrichtungen fehleranfällig und benötigen umfangreiche und teure Tests im Vorfeld eines Einsatzes.

Das Dokument WO 2011/104518 A1 offenbart eine Vorrichtung mit einer Stützstruktur, einer relativ zu der Stützstruktur bewegbaren Komponente und einem Aktuator zum Bewegen der bewegbaren Komponente. Der Aktuator umfasst acht Drähte aus einer Formgedächtnislegierung, die in Bezug auf eine Achse der Vorrichtung geneigt ausgebildet sind. Durch ein Ansteuern der Drähte soll mittels der Vorrichtung beispielsweise eine optische Bildstabilisation ermöglicht werden.

Des Weiteren ist aus dem Dokument JP H05 104475 A eine Vorrichtung bekannt, die eine stationäre kreisförmige Platte 2 und eine bewegbare kreisförmige Platte 1 aufweist, die über eine Feder 4 verbunden sind. Zwischen den Platten 1, 2 sind ferner Drähte 5a-5h aus einer Formgedächtnislegierung in einer V-Form angeordnet, um die bewegbare Platte 1 zu bewegen.

Es ist Aufgabe der vorliegenden Erfindung, eine Vorrichtung zum Halten und Ausrichten einer, insbesondere in der Raumfahrt verwendeten Nutzkomponente, anzugeben, welche baulich und/oder funktional verbessert ist.

Diese Aufgabe wird gelöst durch eine Vorrichtung gemäß den Merkmalen des Patentanspruchs 1. Vorteilhafte Ausgestaltungen ergeben sich aus den abhängigen Patentansprüchen.

Es wird eine Vorrichtung zum Halten und Ausrichten einer Nutzkomponente, insbesondere eines optischen Elements oder einer elektrischen oder chemischen Schubdüse, vorgeschlagen, welche ein erstes und ein zweites Gehäuseteil sowie eine Kippvorrichtung umfasst. Das erste Gehäuseteil ist an einem ersten Ende zur ortsfesten Anordnung an einem Träger, insbesondere einem Raumfahrzeug, ausgebildet. Das zweite Gehäuseteil ist an einem zweiten Ende zur Verbindung der Nutzkomponente ausgebildet. Das erste Ende und das zweite Ende kommen, bezogen auf eine Längsachse der Vorrichtung, an entgegengesetzten Seiten bzw. Enden der Vorrichtung zum Liegen. Die Kippvorrichtung verbindet das erste und das zweite Gehäuseteil mechanisch miteinander und ermöglicht ein definiertes Ausrichten und Halten der Relativposition des zweiten Gehäuseteils relativ zu dem ersten Gehäuseteil. Die Kippvorrichtung umfasst als Aktuator eine Anzahl an Drähten aus einer Formgedächtnislegierung, wobei die Länge eines jeden der Anzahl an Drähten individuell durch eine jeweilige Bestimmung des Widerstands, der als Regelgröße in einem Regelkreis verarbeitbar ist, einstellbar ist.

Die Erfindung schlägt somit vor, das elektro-thermisch-mechanische Verhalten einer Anzahl an Drähten aus einer Formgedächtnislegierung (englisch: Shape Memory Alloy, SMA) als Motor bzw. Aktuator zu nutzen. Das Widerstandsverhalten der Formgedächtnislegierung wird dabei als Regelgröße in einem Regelkreis rückgeführt und damit als inhärenter Positionssensor verwendet.

Es wird somit die Änderung des spezifischen Widerstands der Anzahl an Drähten bei der Phasenumwandlung von Martensit in Austenit genutzt, wobei der Widerstand als Regelgröße der Kippvorrichtung verarbeitet wird. Über die dedizierte Änderung des Widerstands kann die Ausdehnung oder Verkürzung (und damit dessen absolute Länge) eines jeweiligen Drahtes und somit die Position des Drahtes in lateraler Richtung im Raum bestimmt werden.

Eine solche Vorrichtung weist gegenüber einer herkömmlichen Vorrichtung mit Schrittmotoren, Getrieben und Sensoren eine hohe Gewichtsersparnis auf. Die Vorrichtung kann auf einfache Weise skaliert und adaptiert werden. Sie lässt sich damit für verschiedene Nutzkomponenten ohne umfangreiche und teure Verifikationstests einsetzen.

Insbesondere ist es möglich, auf Positionssensoren zu verzichten, da, wie beschrieben, die inhärenten Eigenschaften einer Formgedächtnislegierung dazu genutzt werden, um die Position der einzelnen Aktuatoren im Raum zu bestimmen.

Darüber hinaus weist die Erfindung weitere Vorteile auf:
Die Komplexität des mechatronischen Systems ist durch den Wegfall vieler elektronischer Komponenten gering. Die Formgedächtnislegierungen ermöglichen einen größtmöglichen mechanischen Energieeinsatz bei geringstmöglichem Bauraum. Die Vorrichtung weist eine hohe Robustheit und Zuverlässigkeit zum Halten und Ausrichten der Nutzkomponente auf.

Das erste und das zweite Gehäuseteil kann zumindest abschnittsweise zylindrisch ausgebildet sein. Die Längsachse der Vorrichtung kann dann als Rotationsachse betrachtet werden.

Unter einer definierten Ausrichtung ist, ausgehend von einer Ebene (x-y-Ebene), die senkrecht auf die Längsachse der Vorrichtung steht, eine (mehr oder minder) beliebige Neigung der Ebene gegenüber der Längsachse (z-Achse) zu verstehen.

Gemäß einer Ausgestaltung ist die Anzahl an Drähten jeweils mechanisch fest mit dem ersten und dem zweiten Gehäusebauteil verbunden. Genauer ist ein jeweiliges erstes Ende eines jeweiligen Drahts mit dem ersten Gehäusebauteil und ein jeweiliges zweites Ende mit dem zweiten Gehäusebauteil verbunden. Dadurch ist die Lage der Anzahl an Drähten zwischen dem ersten und dem zweiten Bauteil bekannt, so dass eine genaue Position zur Bestimmung ermöglicht ist.

Die Anzahl an Drähten kann aus einer Nickel-Titan-Legierung bestehen. Eine Nickel-Titan-Legierung (NiTi) wird auch als Nitinol bezeichnet. Nitinol ist die intermetallische Phase NiTi mit einer geordnet-kubischen Kristallstruktur, die sich von der von Titan und Nickel unterscheidet. Es besteht zum Großteil aus Nickel und einem weiteren großen Teil Titan. Die Legierung ist korrosionsbeständig und hochfest sowie pseudoelastisch verformbar. Über das Legierungverhältnis lässt sich die Transformationstemperatur beeinflussen.

Die Anzahl an Drähten ist gemäß einer weiteren Ausgestaltung parallel zu der Längsachse der Vorrichtung angeordnet. Es ist weiterhin zweckmäßig, wenn die Anzahl an Drähten gleich dick ist. Die Änderung der Länge eines oder mehrerer Drähte führt dann in Abhängigkeit der Anordnung zwischen dem ersten und dem zweiten Gehäuseteil zu einer Ausrichtung des zweiten Gehäuseteils relativ zu dem ersten Gehäuseteil.

Es ist weiterhin zweckmäßig, wenn die Kippvorrichtung zumindest ein Federelement, das das erste und das zweite Gehäuseteil auseinander zu drücken sucht, und/oder ein Kegel-Pfanne-Verbindungselement, das eine beliebige Verschwenkung des zweiten Gehäuseteils relativ zu dem ersten Gehäuseteil ermöglicht, umfasst. In Verbindung mit dem zumindest einem Federelement, das insbesondere als Druckfeder ausgestaltet ist und/oder dem Kegel-Pfanne-Verbindungselement kann die Ausrichtung und die Rückstellung der Ausrichtung des zweiten Gehäuseteils relativ zu dem ersten Gehäuseteil in definierter Weise erfolgen.

Gemäß der Erfindung sind das erste und das zweite Gehäuseteil über einen Freigabemechanismus miteinander verbunden, welcher in einer Startkonfiguration eine Relativbewegung des ersten und des zweiten Gehäuseteils blockiert und in einer Betriebskonfiguration eine Relativbewegung des ersten und des zweiten Gehäuseteils ermöglicht. Dadurch wird in der Betriebskonfiguration ein Ausrichten des zweiten Gehäuseteils relativ zu dem ersten Gehäuseteil ermöglicht. In der Startkonfiguration sind das erste und das zweite Gehäuseteil starr miteinander verbunden, was beispielsweise während des Starts eines Raumfahrtzeugs in den Orbit zweckmäßig ist, und die Einleitung übermäßiger Kräfte in die Vorrichtung, insbesondere in die Kippvorrichtung mit den Drähten zu vermeiden.

Das erste und das zweite Gehäuseteil sind gemäß einer weiteren Ausgestaltung zumindest in der Betriebskonfiguration über die Kippvorrichtung zueinander beabstandet. Hierdurch wird die Relativbewegung des zweiten Gehäuseteils relativ zu dem ersten Gehäuseteil ermöglicht. Demgegenüber können das erste und das zweite Gehäuseteil in der Startkonfiguration aneinander anliegen. Die relative Position von erstem und zweitem Gehäuseteil in der Startkonfiguration wird durch den Aufbau des Freigabemechanismus bestimmt. Das Anliegen der beiden Gehäuseteile stellt beim Start eines Raumfahrtzeugs sicher, dass keine Relativbewegung der beiden Gehäuseteile zueinander möglich ist und dadurch eventuell die Anzahl an Drähten sowie weitere Komponenten der Kippvorrichtung schädigen könnte.

Um die Drähte vor dem Betrieb der Vorrichtung nicht zu schädigen, ist die Anzahl an Drähten in der Startkonfiguration nicht gespannt. Demgegenüber ist vorgesehen, dass nach Auslösung des Freigabemechanismus das zumindest eine Federelement die Anzahl an Drähten spannt.

Die Kippbewegung des zweiten Gehäuseteils relativ zu dem ersten Gehäuseteil kann auf verschiedene Weisen realisiert sein. Jede der nachfolgend beschriebenen Varianten weist dabei Vorteile hinsichtlich der Genauigkeit und der Systemstatusanforderung auf, wobei jedoch alle Varianten gleichwertig im Hinblick auf die Nutzung einer Anzahl von Drähten aus einer Formgedächtnislegierung als Aktuator unter Nutzung des Widerstandsverhaltens als Regelgröße in einem Regelkreis eingesetzt werden können.

In der ersten Variante umfasst die Kippvorrichtung eine zwischen dem ersten und dem zweiten Gehäuseteil vorgespannte Feder, die zentral im Bereich der Längsachse der Vorrichtung angeordnet ist. Durch die als Druckfeder ausgestaltete Feder werden die Drähte entlang der Rotorachse parallel gespannt. Durch die Druckfeder kann ferner nach dem Auslösen des Freigabemechanismus die Vorrichtung von der Startkonfiguration in die Betriebskonfiguration gebracht werden.

Weiter umfasst in dieser Variante die Kippvorrichtung drei Drähte, die äquidistant, d.h. in einer 120° Anordnung, auf einem Kreis um die Längsachse der Vorrichtung angeordnet sind. Dadurch ist es möglich, das zweite Gehäuseteil relativ zu dem ersten Gehäuseteil in beliebiger Weise zu neigen.

In der zweiten und dritten Variante ist das Kegel-Pfanne-Verbindungselement zentral im Bereich der Längsachse der Vorrichtung anstelle der Druckfeder angeordnet.

Bei der zweiten Variante umfasst die Kippvorrichtung zwei Drähte, wobei die zwei Drähte auf einem Kreis um die Längsachse um 90° versetzt zueinander angeordnet sind. Jedem der Drähte ist eine Druckfeder zugeordnet, die, bezogen auf die Längsachse, auf dem Kreis dem zugeordneten Draht gegenüber angeordnet ist. Es ist weiterhin vorgesehen, dass die einem Draht zugeordnete Feder im gleichen Hebelverhältnis auf der dem Draht gegenüber liegenden Seite diesem entgegen wirkt. Dieses Prinzip wirkt um beide Achsen, welche durch die Anordnung der zwei Drähte auf dem Kreis um die Längsachse und die zugeordneten Druckfedern definiert sind. D.h. eine Achse wird durch eine Linie, auf der ein erster der Drähte, die zugeordnete Druckfeder und der Schnittpunkt mit der Längsachse liegen, gebildet. Die andere Achse wird durch eine andere Linie, auf der der andere (zweite) der Drähte, die zugeordnete Druckfeder und der Schnittpunkt mit der Längsachse liegen, gebildet.

In der dritten Variante umfasst die Kippvorrichtung vier Drähte, die auf einem Kreis um die Längsachse der Vorrichtung äquidistant verteilt sind. Dies bedeutet, die vier Drähte sind um die Längsachse um 90° versetzt zueinander angeordnet. Über das zentral angeordnete Kegel-Pfanne-Verbindungselement als Wippe sind jeweils zwei Drähte im gleichen Hebelverhältnis als Hebel miteinander verbunden.

Diese arbeiten antagonistisch. Dabei kann in beliebiger Position die angelegte Spannung unterbrochen werden, wodurch ein leistungsloser Betrieb möglich ist.

Die Erfindung wird nachfolgend näher anhand eines Ausführungsbeispiels in der Zeichnung näher erläutert. Es zeigen:
- Fig. 1: eine Querschnittsdarstellung durch ein Ausführungsbeispiel einer erfindungsgemäßen Vorrichtung zum Halten und Ausrichten einer nicht dargestellten Nutzkomponente,
- Fig. 2: eine perspektivische Darstellung der Vorrichtung von Fig. 1,
- Fig. 3: eine Draufsicht auf die in Fig. 1 dargestellte Vorrichtung,
- Fig. 4: eine längs der Linie A-A geschnittene Darstellung der Vorrichtung aus Fig. 3, und
- Fig. 5a und 5b: jeweils eine Querschnittsdarstellung einer nicht ausgerichteten und einer ausgerichteten Vorrichtung.

In den nachfolgenden Figuren ist ein Ausführungsbeispiel einer möglichen Variante von mehreren Varianten einer Vorrichtung zum Halten und Ausrichten einer Nutzkomponente beschrieben. Die Vorrichtung trägt beispielsweise einen beliebigen elektrischen oder chemischen Thruster (Schubdüse) oder ein auszurichtendes optisches Element. Die Vorrichtung selbst ist beispielsweise an einem Raumfahrtzeug, wie z.B. einem Satelliten, angeordnet. In diesem Umfeld stellt die Vorrichtung einen sog. "Thruster Pointer" dar, welcher für sog. Tip/Tilt-Pointing Aufgaben von elektrischen wie chemischen Triebwerken oder optischen Elementen vorgesehen ist.

Die Vorrichtung besteht aus einem ersten, unteren Gehäuseteil 1 einem zweiten, oberen Gehäuseteil 2 und einer das erste und das zweite Gehäuseteil 1, 2 mechanisch miteinander verbindenden Kippvorrichtung 36, welche ein definiertes Ausrichten und Halten der Relativposition des zweiten Gehäuseteils 2 relativ zu dem ersten Gehäuseteil 1 ermöglicht. Das erste, untere Gehäuseteil 1 kann mit seinem ersten Ende 18 an einem Träger, beispielsweise einem Satelliten, befestigt sein. An einem zweiten Ende 19 des zweiten Gehäuseteils 2, welche auf der dem ersten Gehäuseteil 1 abgewandten Seite des zweiten Gehäuseteils 2 liegt, erfolgt eine Verbindung zu der Nutzkomponente, d.h. einer nicht näher dargestellten elektrischen oder chemischen Schubdüse oder einem auszurichtenden optischen Element.

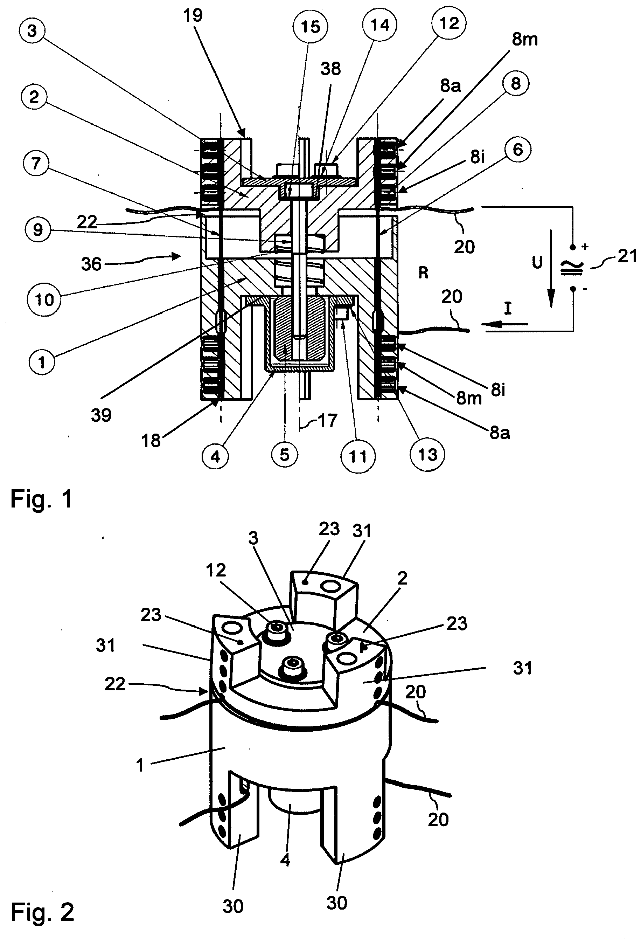

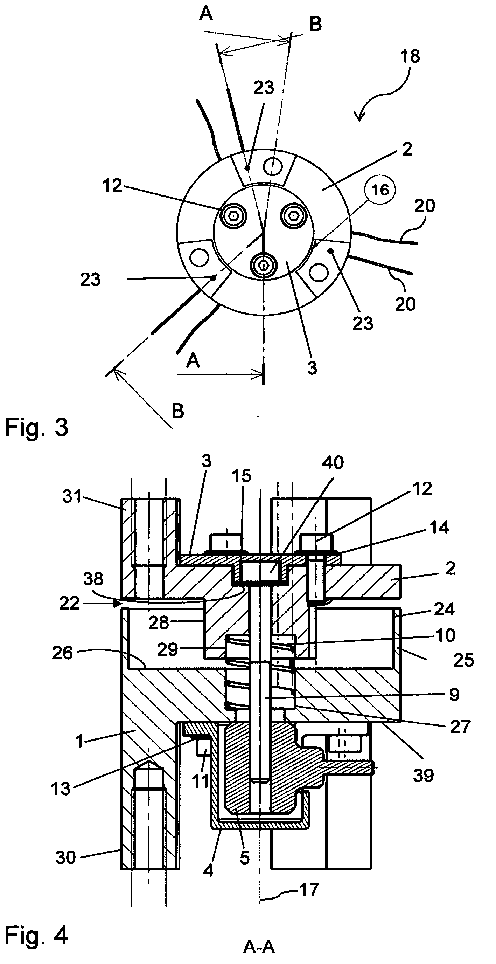

Wie ohne weiteres den Fig. 1, 2, 4 und 5 zu entnehmen ist, kommen das erste Ende 18 des ersten Gehäuseteils 1 und das zweite Ende 19 des zweiten Gehäuseteils 2, bezogen auf eine Längsachse 17 an entgegengesetzten Enden der Vorrichtung zum Liegen. Wie unschwer insbesondere den Fig. 2 und 3 entnehmbar ist, sind das erste und das zweite Gehäuseteil 1, 2 in einer Draufsicht (vergl. Fig. 3) kreisförmig ausgebildet. Die Längsachse 17 entspricht damit einer Rotationsachse der Vorrichtung.

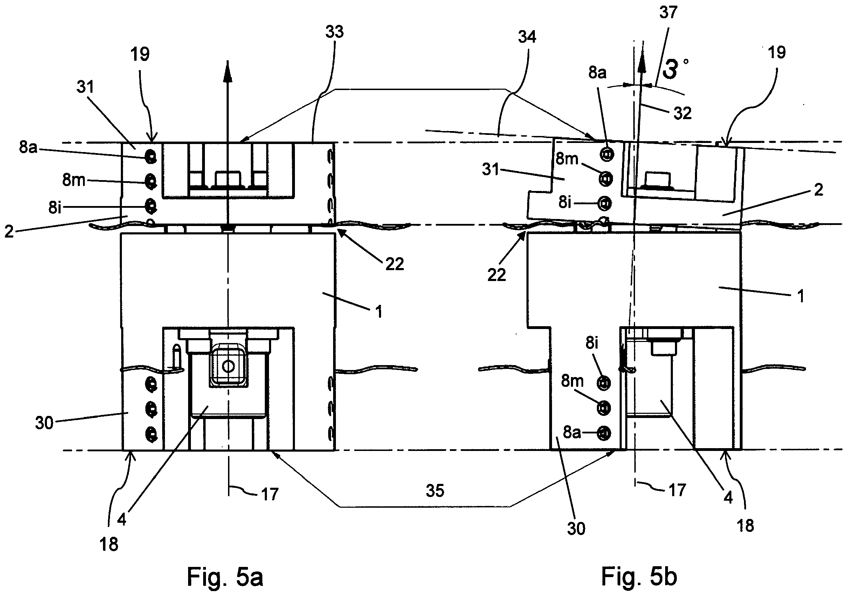

Wie am besten aus den Fig. 5a und 5b ersichtlich ist, liegt das erste Ende des ersten, unteren Gehäuseteils 1 in einer Befestigungsebene 35, welche senkrecht zu Längsachse 17 liegt, um an dem nicht näher dargestellten Träger befestigt zu werden. Das zweite Ende 19 des zweiten, oberen Gehäuseteils 2 liegt in einer Befestigungsebene 33. Die Befestigungsebene 33 ist senkrecht zu Längsachse 17, solange das zweite Gehäuseteil 2 relativ zu dem ersten Gehäuseteil 1 sich in einer Ausgangsposition befindet (Fig. 5a). In dieser ist die Befestigungsebene 33 relativ zu Befestigungsebene 35 nicht geneigt oder verschwenkt. Im Rahmen der vorliegenden Beschreibung wird hierunter "keine Ausrichtung" verstanden. Ist hingegen das zweite Gehäuseteil 2 relativ zu dem ersten Gehäuseteil 1 verschwenkt (vergl. Fig. 5b), so liegt die Befestigungsebene 33 senkrecht zu einer Neigungsachse 32 und entspricht einer schiefen Ebene 34. Der zwischen der Neigungsachse 32 und der Längsachse 17 eingeschlossene Winkel 37 ist das Resultat einer Aktuierung der Kippvorrichtung 36, um das zweite Gehäuseteil 2 relativ zu dem ersten Gehäuseteil 1 definiert (im Beispiel um 3°) auszurichten. Die Nutzkomponente ist an der Befestigungsebene 33 angeordnet.

Das erste und das zweite Gehäuseteil 1, 2 sind aus einem Metall, insbesondere aus Aluminium gebildet. Die Gehäuseteile 1, 2 können beispielsweise durch Drehen und/oder Fräsen hergestellt sein.

Die Kippvorrichtung 36 umfasst in der in den Figuren dargestellten Variante drei gleich lange und gleich dicke Drähte 6, 7, 16 aus einer Formgedächtnislegierung und eine zentral angeordnete, vorgespannte (Druck-)Feder 10. Die Drähte 6, 7, 16 sind auf einem Kreis um die Längsachse um 120° versetzt, d.h. äquidistant zueinander, angeordnet. Die drei Drähte 6, 7, 16 verlaufen dabei parallel zueinander und parallel zu der Längsachse 17. Die Drähte 6, 7 können am besten aus der Querschnittsdarstellung der Fig. 1 erkannt werden. Die Anordnung der drei Drähte 6, 7, 16 geht aus der perspektivischen Darstellung der Fig. 2 sowie der Fig. 3, die eine Draufsicht auf die erfindungsgemäße Vorrichtung zeigt, hervor.

Die Drähte 6, 7, 16 sind in einem jeweiligen in dem ersten und dem zweiten Gehäuseteil 1, 2 vorgesehenen Kanal 23 (vergl. Fig. 2 und 3) angeordnet. Die einem jeweiligen Draht zugeordnete Kanalabschnitte in dem ersten und dem zweiten Gehäuseteil 1, 2 sind dabei entlang einer gemeinsamen Achse angeordnet, welche sich parallel zu der Längsachse 17 erstreckt. Wie am besten aus der Querschnittsdarstellung der Fig. 1 hervorgeht, sind die Drähte 6, 7, 16 sowohl in dem ersten Gehäuseteil 1 als auch in dem zweiten Gehäuseteil 2 mit jeweils drei Gewindestiften 8 in den zugeordneten Kanal 23 geklemmt. Insgesamt sind pro Draht sechs Gewindestifte 8 vorgesehen.

Die Gewindestifte 8 sind, wie dies gut aus den Fig. 1 und 2 hervorgeht, in sich in longitudinaler Richtung erstreckenden Vorsprüngen 30, 31, die einen kreisringsegmentförmigen Querschnitt haben, vorgesehen. Dabei bezeichnet der Vorsprung 30 zur Aufnahme und Fixierung eines Drahts den einen jeweiligen Draht 6, 7, 16 zugeordneten Vorsprung des ersten, unteren Gehäuseteils 1. Der Vorsprung 31 zur Aufnahme und Fixierung eines jeweiligen Drahts 6, 7, 16 ist dem zweiten, oberen Gehäuseteil 2 zugeordnet.

Gewindestifte 8a am jeweiligen freien Ende eines jeweiligen Drahtes 6, 7, 16 sind mit vollem Moment angezogen. Ein jeweiliger mittlerer Gewindestift 8m ist mit nur halben Moment angezogen. Der "innere" Gewindestift 8i, welcher jeweils dem anderen Gehäuseteil zugeordnet ist, ist lediglich handfest angezogen.

Die Drähte 6, 7, 16 sind beispielsweise aus einer Nickel-Titan-Legierung, auch als Nitinol bekannt, gebildet. Die Drähte 6, 7, 16 bilden einen Aktuator in einem Regelkreis. Hierzu ist jeder der Drähte 6, 7, 16 an seinen entgegengesetzten Enden mit jeweiligen Anschlussleitungen 20 verbunden, welche ihrerseits mit einer Stromquelle 21 verbunden sind. Dies ist schematisch in Fig. 1 dargestellt. Zur Steuerung der Längenänderung eines jeweiligen Drahtes 6, 7, 16, d.h. einer Verkürzung oder einer Verlängerung, wird die Änderung des spezifischen Widerstandes eines jeweiligen Drahtes bei der Phasenumwandlung von Martensit in Austenit als Regelgröße genutzt. Der aktuell gemessene Wiederstand, der sich aus der anliegenden Spannung und dem gemessenen Strom ergibt, wird als Regelgröße zur Einstellung der Längenänderung verwendet. Über die dedizierte Änderung des Widerstandes wird damit die Ausdehnung eines jeweiligen Drahtes 6, 7, 16 genutzt, um die Position in lateraler Richtung, d.h. in Richtung der Längsachse 17, exakt zu bestimmen.

Die bedeutet, das elektro-thermo-mechanische Verhalten der aus einer Formgedächtnislegierung bestehenden Drähte 6, 7, 16 wird als Motor genutzt. Das Widerstandsverhalten der Drähte aus Formgedächtnislegierung wird als Regelgröße in einem Regelkreis rückgeführt und damit als inhärenter Positionssensor verwendet.

Für die Ausrichtung des zweiten Gehäuseteils 2 relativ zu dem ersten Gehäuseteil 1, wie dies schematisch in Fig. 5a und 5b dargestellt ist, ist neben einer Aktuierung zumindest eines der Drähte 6, 7, 16 auch die für eine Vorspannung sorgende Druckfeder 10 erforderlich.

Wie beschrieben, ist die Feder 10 zentral zwischen den beiden Gehäuseteilen 1, 2 angeordnet. Das erste Gehäuseteil 1 weist auf der dem zweiten Gehäuseteil 2 zugewandten Ende eine topfförmige Ausnehmung 24 auf. Die Tiefe der Ausnehmung 24 ist derart bemessen, dass ein Vorsprung 28 des zweiten Gehäuseteils 2, der dem ersten Gehäuseteil 1 zugewandt ist, nahezu vollständig in die Ausnehmung 24 eintauchen kann. Die Höhe des Vorsprungs 28 entspricht damit in etwa der Höhe einer die Ausnehmung 24 definierenden, kreisförmigen Wand 25. Am Boden 26 weist die Ausnehmung 24 eine weitere, kleinere Ausnehmung 27 auf. Die Feder 10 stützt sich am Boden der Ausnehmung 27 ab. Der Durchmesser der Ausnehmung 27 entspricht in etwa dem Außendurchmesser der Feder 10. Korrespondierend hierzu weist der Vorsprung 28 eine Ausnehmung 29 auf, in die die Feder mit ihren anderen, freien Ende eintaucht. Die Feder stützt sich am Boden der Ausnehmung 29 ab.

Das erste und das zweite Gehäuseteil 1, 2 sind über einen Freigabemechanismus miteinander verbunden. Der Freigabemechanismus sorgt dafür, dass in einer Startkonfiguration der Vorrichtung eine Relativbewegung des ersten und des zweiten Gehäuseteils 1, 2 blockiert wird und damit keine Neigung bzw. Ausrichtung des zweiten Gehäuseteils zu dem ersten Gehäuseteil möglich ist. Erst in einer Betriebskonfiguration, in der der Freigabemechanismus ausgelöst ist, ist eine Relativbewegung des ersten und des zweiten Gehäuseteils 1, 2 ermöglicht. Der Freigabemechanismus kann in den Fig. 1 und 4 am besten erkannt werden.

In der Startkonfiguration, die in den Figuren nicht dargestellt ist, liegen die beiden Gehäuseteile 1, 2 mit ihren einander zugewandten Flächen aneinander. In der Startkonfiguration sind die Drähte 6, 7, 16 noch nicht gespannt.

Der Freigabemechanismus verfügt hierzu über einen Bolzen 9, der durch eine koaxial verlaufende Bohrung in dem ersten und dem zweiten Gehäuseteil 1, 2 gesteckt ist. Wie gut aus den Querschnittsdarstellungen der Fig. 1, 4 und 5 hervorgeht, geht der Bolzen 9 dabei durch die Feder 10 hindurch. An seinem dem zweiten Gehäuseteil 2 zugewandten Ende weist der Bolzen 9 eine Mutter 40 oder einen Bolzenkopf auf, die oder der über eine Unterlegscheibe 15 das zweite Gehäuseteil 2 mit einer Kraft beaufschlagt. Die Mutter 40 des Bolzens 9 liegt dabei (nahezu) vollständig in einer Ausnehmung 38 des zweiten Gehäuseteils 2. Mit seinem anderen, freien Ende ragt der Bolzen 9 über eine dem ersten Ende 18 zugewandte Oberseite 39 des ersten Gehäuseteils hinaus. Dort ist ein Aktuator 5 in einem Gehäuse 4 des Freigabemechanismus angeordnet.

Das Gehäuse 4 ist über Schrauben 11 und zugeordnete Unterlegscheiben 13 mit dem ersten Gehäuseteil 1 verbunden. Der Aktuator 5 kann elektrisch betätigt werden und sorgt dabei durch eine Kraftbeaufschlagung des Bolzens, dass dieser bricht. Um zu verhindern, dass der mit dem zweiten Gehäuseteil 2 verbundene Abschnitt des Bolzens 9 sich von dem zweiten Gehäuseteil 2 löst, ist von dem zweiten Ende 19 her ein Fixierelement 3 für den Freigabemechanismus vorgesehen. Das Fixierelement 3 in Form einer mehr oder minder kreisförmigen Platte ist mit beispielhaft drei Schrauben 12 und zugeordneten Unterlegscheiben 14 an dem zweiten Gehäuseteil 2 befestigt. Der Mechanismus ist auch als Frangibolt-Mechanismus bekannt.

Nach dem Auslösen des Freigabemechanismus wird die zwischen dem ersten und dem zweiten Gehäuseteil 1, 2 vorgespannte Feder 10 aktiviert, d.h. die Feder 10 drückt die Gehäuseteile 1, 2 gegen die Kraft der Drähte 6, 7, 16 auseinander, wodurch der mit 22 gekennzeichnete Spalt entsteht. Diese Betriebskonfiguration ist in den Figuren dargestellt. Nun kann jeder der Drähte 6, 7, 16 über seinen spezifischen Widerstand in dem bereits beschriebenen Stromkreislauf in seiner Länge geregelt werden.

Die Änderung der Länge eines oder mehrerer der Drähte 6, 7, 16 führt über die Wipp-Funktion der Feder 10 zu einem Verschwenken des zweiten Gehäuseteils 2 relativ zu dem ersten Gehäuseteil 1 und somit zu einer Ausrichtung der Befestigungsebene 33.

Gegenüber einer herkömmlichen Vorrichtung zum Ausrichten einer Nutzkomponente weist die beschriebene Vorrichtung eine große Massenersparnis auf. Da nur wenige elektronische Komponenten (Messung des Widerstands der Drähte) benötigt werden, ergibt sich eine geringe Komplexität des mechatronischen Systems. Die Verwendung von Drähten aus einer Formgedächtnislegierung ermöglicht einen hohen mechanischen Energieeinsatz auf geringst möglichem Bauraum.

Die Vorrichtung weist eine hohe Robustheit und Zuverlässigkeit auf.

Die Ausrichtung des zweiten Gehäuseteils 2 relativ zu dem ersten Gehäuseteil 1 kann auch auf andere Art und Weise erfolgen. Hierzu kann zusätzlich oder alternativ zu der zentral angeordneten Feder 10 ein Kegel-Pfanne-Verbindungselement vorgesehen sein. Eine derartige Konfiguration ist in den Figuren nicht dargestellt.

Wird in einer ersten alternativen Variante ein zentral angeordnetes Kegel-Pfanne-Verbindungselement vorgesehen, so werden zwei Drähte, die in einem 90°-Winkel versetzt zueinander auf einem Kreis um die Längsachse angeordnet werden, vorgesehen. Das zweite Gehäuseteil 2 wird über das Kegel-Pfanne-Verbindungselement im Zentrum um die Längsachse 17 gekippt. Das Kippen um eine der beiden Achsen, welche senkrecht zur Längsachse und bei keiner Ausrichtung in der Befestigungsebene 35 liegen, wird von einem sich zusammenziehenden Draht erreicht, wobei diesem eine Feder in gleichem Hebelverhältnis auf der gegenüberliegenden Seite entgegenwirkt. Dieses Prinzip wirkt um beide Achsen. Dies bedeutet, jedem Draht ist auf der gegenüberliegenden Seite ein Federelement zugeordnet.

In einer zweiten alternativen Ausgestaltung sind ein zentral angeordnetes Kegel-Pfanne-Verbindungselement sowie vier Drähte in einer 90°-Anordnung auf einem Kreis um die Längsachse 17 vorgesehen. Das System wird in der Startkonfiguration über den verschraubten Freigabemechanismus gehalten. Dabei sind die Gehäuseteile jedoch nicht auf Anschlag gebracht. Der Bolzen 9 wird derart getrennt, dass er mit dem Schaft 3 in seinem Hüllzylinder kippen kann. Es sind über das zentrale Kegel-Pfanne-Verbindungselement als Wippe jeweils zwei Drähte im gleichen Hebelverhältnis als Hebel miteinander verbunden. Diese arbeiten antagonistisch. Dabei kann in beliebiger Position die angelegte Spannung unterbrochen werden. Hierdurch ergibt sich ein leistungsloser Betrieb.

### BEZUGSZEICHENLISTE

- 1: erstes (unteres) Gehäuseteil
- 2: zweites (oberes) Gehäuseteil
- 3: Fixierelement für Frangibolt-Mechanismus
- 4: Gehäuse des Freigabemechanismus 9 (Frangibolt-Gehäuse)
- 5: Aktuator des Freigabemechanismus 9 (Frangibolt-Aktuator)
- 6: SMA-Draht
- 7: SMA-Draht
- 8: Gewindestift
- 9: Freigabe-Mechanismus (Bolzen)
- 10: Feder
- 11: Schraube
- 12: Schraube
- 13: Unterlegscheibe
- 14: Unterlegscheibe
- 15: Unterlegscheibe
- 16: SMA-Draht
- 17: Längsachse
- 18: erstes Ende
- 19: zweites Ende
- 20: Anschlussleitung
- 21: Stromquelle
- 22: Spalt
- 23: Kanal für SMA-Draht
- 24: Ausnehmung
- 25: Wand, umlaufend
- 26: Boden der Ausnehmung 24
- 27: Ausnehmung im Boden 26 zur Aufnahme/Führung der Feder 10
- 28: Vorsprung
- 29: Ausnehmung im Vorsprung 28 zur Aufnahme/Führung der Feder 10
- 30: Vorsprung zur Aufnahme und Fixierung eines Drahts
- 31: Vorsprung zur Aufnahme und Fixierung eines Drahts
- 32: Neigungsachse
- 33: Befestigungsebene senkrecht zur Längsachse 17 zur Befestigung an Nutzkomponente
- 34: schiefe Ebene, senkrecht zur Neigungsachse 32 zur Befestigung an Nutzkomponente
- 35: Befestigungsebene, senkrecht zur Längsachse 17, zur Befestigung an Träger
- 36: Kippvorrichtung
- 37: Winkel
- 38: Ausnehmung
- 39: Oberseite
- 40: Mutter oder Bolzenkopf

## Patentansprüche

1. Vorrichtung zum Halten und Ausrichten einer Nutzkomponente, insbesondere eines optischen Elements oder einer elektrischen oder chemischen Schubdüse, umfassend:
- ein erstes Gehäuseteil (1), das an einem ersten Ende (18) zur ortsfesten Anordnung an einem Raumfahrzeug, ausgebildet ist;
- ein zweites Gehäuseteil (2), das an einem zweiten Ende (19) zur Verbindung mit der Nutzkomponente ausgebildet ist;
- wobei das erste Ende (18) und das zweite Ende (19) bezogen auf eine Längsachse (17) an entgegengesetzten Seiten der Vorrichtung zum Liegen kommen;
- eine Kippvorrichtung (36), die das erste und das zweite Gehäuseteil (1, 2) mechanisch miteinander verbindet und ein definiertes Ausrichten und Halten der Relativposition des zweiten Gehäuseteils (2) relativ zu dem ersten Gehäuseteil (1) ermöglicht, wobei die Kippvorrichtung (36) als Aktuator eine Anzahl an Drähten (6, 7, 16) aus einer Formgedächtnislegierung umfasst, wobei die Länge eines jeden der Anzahl an Drähten (6, 7, 16) individuell durch eine jeweilige Bestimmung des Widerstands, der als Regelgröße in einem Regelkreis verarbeitbar ist, einstellbar ist,
**dadurch gekennzeichnet, dass** das erste und das zweite Gehäuseteil (1, 2) über einen Freigabemechanismus (4, 5, 9) miteinander verbunden sind, welcher in einer Startkonfiguration eine Relativbewegung des ersten und des zweiten Gehäuseteils (1, 2) blockiert und in einer Betriebskonfiguration eine Relativbewegung des ersten und des zweiten Gehäuseteils (1, 2) ermöglicht, wobei der Freigabemechanismus (4, 5, 9) einen Bolzen (9), der durch eine koaxial verlaufende Bohrung in dem ersten und dem zweiten Gehäuseteil (1, 2) gesteckt ist, umfasst,
wobei der Bolzen (9) an einem ersten, dem zweiten Gehäuseteil (2) zugewandten Ende eine Mutter (40) oder einen Bolzenkopf aufweist, die oder der das zweite Gehäuseteil (2) mit einer Kraft beaufschlagt, und wobei der Bolzen (9) mit einem zweiten, gegenüberliegenden Ende über eine dem freien Ende (18) des ersten Gehäuseteils (1) zugewandte Oberseite (39) des ersten Gehäuseteils (1) hinausragt, und
wobei ein Aktuator (5) des Freigabemechanismus zum Aktivieren der Betriebskonfiguration an dem zweiten Ende des Bolzens (9) angeordnet ist.

2. Vorrichtung nach Anspruch 1, bei der die Anzahl an Drähten (6, 7, 16) jeweils mechanisch fest mit dem ersten und dem zweiten Gehäusebauteil (1, 2) verbunden ist.

3. Vorrichtung nach Anspruch 1 oder 2, bei der die Anzahl an Drähten (6, 7, 16) aus einer Nickel-Titan-Legierung (NiTi) bestehen.

4. Vorrichtung nach einem der vorhergehenden Ansprüche, bei der die Anzahl an Drähten (6, 7, 16) parallel zu der Längsachse (17) der Vorrichtung angeordnet ist.

5. Vorrichtung nach einem der vorhergehenden Ansprüche, bei der die Anzahl an Drähten (6, 7, 16) gleich dick sind.

6. Vorrichtung nach einem der vorhergehenden Ansprüche, bei der die Kippvorrichtung (36) zumindest ein Federelement (10), das das erste und das zweite Gehäuseteil (1, 2) auseinander zu drücken sucht, und/oder ein Kegel-Pfanne-Verbindungselement, das eine beliebige Verschwenkung des zweiten Gehäuseteils (2) relativ zu dem ersten Gehäuseteil (1) ermöglicht, umfasst.

7. Vorrichtung nach einem der vorhergehenden Ansprüche, bei der das erste und das zweite Gehäuseteil (1, 2) zumindest in der Betriebskonfiguration über die Kippvorrichtung zueinander beabstandet sind.

8. Vorrichtung nach einem der vorhergehenden Ansprüche, bei der die Anzahl an Drähten (6, 7, 16) in der Startkonfiguration nicht gespannt ist.

9. Vorrichtung nach einem der vorhergehenden Ansprüche, bei der nach Auslösung des Freigabemechanismus (4, 5, 9) das zumindest eine Federelement (10) die Anzahl an Drähten (6, 7, 16) spannt.

10. Vorrichtung nach einem der Ansprüche 1 bis 9, bei der die Kippvorrichtung (36) eine zwischen dem ersten und dem zweiten Gehäuseteil (1, 2) vorgespannte Druckfeder (10) umfasst, die zentral im Bereich der Längsachse (17) der Vorrichtung angeordnet ist.

11. Vorrichtung nach Anspruch 10, bei der die Kippvorrichtung (36) drei Drähte (6, 7, 16) umfasst, die äquidistant auf einem Kreis um die Längsachse (17) angeordnet sind.

12. Vorrichtung nach Anspruch 6, bei der das Kegel-Pfanne-Verbindungselement zentral im Bereich der Längsachse (17) der Vorrichtung angeordnet ist.

13. Vorrichtung nach Anspruch 12, bei der die Kippvorrichtung (36) zwei Drähte umfasst, wobei die zwei Drähte auf einem Kreis um die Längsachse um 90° versetzt zueinander angeordnet sind und wobei jedem der Drähte eine Feder zugeordnet ist, die bezogen auf die Längsachse auf dem Kreis dem zugeordneten Draht gegenüber angeordnet ist.

14. Vorrichtung nach Anspruch 13, bei der die einem Draht zugeordnete Feder im gleichen Hebelverhältnis auf der dem Draht gegenüber liegenden Seite diesem entgegen wirkt.

15. Vorrichtung nach Anspruch 12, bei der die Kippvorrichtung vier Drähte umfasst, die auf einem Kreis um die Längsachse der Vorrichtung äquidistant verteilt sind.

16. Vorrichtung nach Anspruch 14, bei der über das zentral angeordnete Kegel-Pfanne-Verbindungselement als Wippe jeweils zwei gegenüberliegende Drähte im gleichen Hebelverhältnis als Hebel miteinander verbunden sind, die antagonistisch arbeiten.

## Claims

1. A device for holding and aligning a component, in particular of an optical element or an electrical or chemical thrust nozzle, the device comprising:
- a first housing part (1), arranged on a first end (18) and configured for stationary arrangement on a space vehicle;
- a second housing part (2) arranged on a second end (19) and configured for connection to the component;
- wherein the first end (18) and the second end (19) rest on opposite sides of the device with respect to a longitudinal axis (17);
- a tilting device (36), which mechanically connects the first and the second housing parts (1, 2) to one another and provides a defined alignment and holding of a relative position of the second housing part (2) in relation to the first housing part (1), wherein the tilting device (36) comprises as an actuator a number of wires (6, 7, 16) made of a shape-memory alloy, wherein a length of each of the number of wires (6, 7, 16) is individually adjustable by a respective determination of a resistance of the respective wire, which is processed as a control variable in a control loop,
**characterized in that** the first and the second housing parts (1, 2) are connected to one another via a release mechanism (4, 5, 9), which, in a starting configuration, blocks relative movement of the first and the second housing parts (1, 2) and, in an operating configuration, allows relative movement of the first and the second housing parts 1, 2)
wherein the release mechanism (4, 5, 9) comprises a bolt (9) inserted through a coaxial bore in the first and second housing parts (1, 2),
wherein the bolt (9) has, at a first end facing the second housing part (2), a nut (40) or a bolt head which applies a force to the second housing part (2), and wherein the bolt (9) projects with a second, opposite end beyond an upper side (39) of the first housing part (1) facing the free end (18) of the first housing part (1), and
wherein an actuator (5) of the release mechanism for activating the operating configuration is arranged at the second end of the bolt (9).

2. The device of claim 1, wherein each of the number of wires (6, 7, 16) is mechanically fixedly connected to the first and the second housing parts (1, 2).

3. The device of claim 1 or 2, wherein the number of wires (6, 7, 16) consist of a nickel-titanium alloy (NiTi).

4. The device according to one of the preceding claims, wherein the number of wires (6, 7, 16) is arranged in parallel to the longitudinal axis (17) of the device.

5. The device according to one of the preceding claims, wherein the number of wires (6, 7, 16) are of equal thickness.

6. The device according to one of the preceding claims, wherein the tilting device (36) comprises at least one spring (10) configured to press the first and the second housing parts (1, 2) away from one another, and/or a cone-socket connection element allowing arbitrary pivoting of the second housing part (2) relative to the first housing part (1).

7. The device according to one of the preceding claims, wherein the first and the second housing parts (1, 2) are spaced apart from one another, at least in the operating configuration, via the tilting device.

8. The device according to one of the preceding claims, wherein the number of wires (6, 7, 16) is not tensioned in the starting configuration.

9. The device according to one of the preceding claims, wherein, after triggering of the release mechanism (4, 5, 9), the at least one spring (10) tensions the number of wires (6, 7, 16).

10. The device according to one of claims 1 to 9, wherein the tilting device (36) comprises a compression spring (10), which is pre-stressed between the first and the second housing parts (1, 2), and which is arranged centrally in the region of the longitudinal axis (17) of the device.

11. The device of claim 10, wherein the tilting device (36) comprises three wires (6, 7, 16) arranged equidistantly on a circle about the longitudinal axis (17).

12. The device of claim 6, wherein the cone-socket connection element is arranged centrally in the region of the longitudinal axis (17) of the device.

13. The device of claim 12, wherein the tilting device (36) comprises two wires, wherein the two wires are arranged offset to one another by 90° on a circle about the longitudinal axis, and wherein each of the wires is associated with a spring, which is arranged opposite to the associated wire on the circle in relation to the longitudinal axis.

14. The device of claim 13, wherein the spring associated with a wire counteracts the wire located on the opposite side in a same lever ratio.

15. The device of claim 12, wherein the tilting device comprises four wires, which are distributed equidistantly on a circle about the longitudinal axis of the device.

16. The device of claim 14, wherein each two wires operating antagonistically are connected to one another in the same lever ratio as a lever via the centrally arranged cone-socket connection element as a rocker.

## Revendications

1. Dispositif de retenue et d'alignement d'une charge utile, en particulier d'un élément optique ou d'une tuyère propulsive électrique ou chimique, comprenant :
- une première partie de boîtier (1) qui, à une première extrémité (18), est conçue pour être installée de manière fixe sur un véhicule spatial,
- une deuxième partie de boîtier (2) qui, à une deuxième extrémité (19), est conçue pour être reliée à ladite charge utile,
- la première extrémité (18) et la deuxième extrémité (19) étant placées sur des côtés opposés du dispositif, en se référant à un axe longitudinal (17),
- un dispositif de basculement (36) qui relie mécaniquement l'une à l'autre la première et la deuxième partie de boîtier (1, 2) et qui permet un alignement défini et une retenue de la position relative de la deuxième partie de boîtier (2) par rapport à la première partie de boîtier (1), le dispositif de basculement (36) comprenant en tant qu'actionneur une pluralité de fils (6, 7, 16) formés à partir d'un alliage de mémoire de forme, la longueur de chacun des fils de la pluralité de fils (6, 7, 16) étant individuellement réglable par détermination respective de la résistance pouvant être utilisée comme grandeur de réglage dans un circuit de régulation,
**caractérisé en ce que** la première et la deuxième partie de boîtier (1, 2) sont reliées l'une à l'autre par l'intermédiaire d'un mécanisme de libération (4, 5, 9) lequel bloque un mouvement relatif de la première et la deuxième partie de boîtier (1, 2) dans une configuration de lancement et permet un mouvement relatif de la première et la deuxième partie de boîtier (1, 2) dans une configuration de service, le mécanisme de libération (4, 5, 9) comprenant un boulon (9) qui est inséré à travers un alésage s'étendant de manière coaxiale dans la première et la deuxième partie de boîtier (1, 2),
le boulon (9) présentant à une première extrémité tournée vers la deuxième partie de boîtier (2) un écrou (40) ou une tête de boulon lequel ou laquelle exerce une force sur la deuxième partie de boîtier (2), et le boulon (9) dépassant avec sa deuxième extrémité opposée de la partie supérieure (39) de la première partie de boîtier (1) tournée vers l'extrémité (18) libre de cette dernière, et l'actionneur (5) du mécanisme de libération étant placé à la deuxième extrémité du boulon (9) pour activer la configuration de service.

2. Dispositif selon la revendication 1, dans le cadre duquel la pluralité de fils (6, 7, 16) est respectivement reliée de manière fixe à la première et à la deuxième partie de boîtier (1, 2).

3. Dispositif selon la revendication 1 ou 2, dans le cadre duquel la pluralité de fils (6, 7, 16) est formée à partir d'un alliage de nickel et de titane (NiTi).

4. Dispositif selon l'une des revendications précédentes, dans le cadre duquel la pluralité de fils (6, 7, 16) est placée parallèlement à l'axe longitudinal (17) du dispositif.

5. Dispositif selon l'une des revendications précédentes, dans le cadre duquel les fils de la pluralité de fils (6, 7, 16) sont d'égale épaisseur.

6. Dispositif selon l'une des revendications précédentes, dans le cadre duquel le dispositif de basculement (36) comprend au moins une pièce ressort (10) qui cherche à faire s'écarter l'une de l'autre la première et la deuxième partie de boîtier (1, 2), et/ou un élément de liaison sous forme de siège conique permettant un pivotement quelconque de la deuxième partie de boîtier (2) par rapport à la première partie de boîtier (1).

7. Dispositif selon l'une des revendications précédentes, dans le cadre duquel la première et la deuxième partie de boîtier (1, 2) sont, pour le moins dans la configuration de service, espacées l'une de l'autre par le dispositif de basculement.

8. Dispositif selon l'une des revendications précédentes, dans le cadre duquel la pluralité de fils (6, 7, 16) n'est pas tendue dans la configuration de lancement.

9. Dispositif selon l'une des revendications précédentes, dans le cadre duquel ladite au moins une pièce ressort tend la pluralité de fils (6, 7, 16) après le déclenchement du mécanisme de libération (4, 5, 9).

10. Dispositif selon l'une des revendications 1 à 9, dans le cadre duquel le dispositif de basculement (36) comprend un ressort de compression (10) précontraint entre la première et la deuxième partie de boîtier (1, 2) et disposé centralement dans la zone de l'axe longitudinal (17) du dispositif.

11. Dispositif selon la revendication 10, dans le cadre duquel le dispositif de basculement (36) comprend trois fils (6, 7, 16) qui sont placés à équidistance sur un cercle autour de l'axe longitudinal (17).

12. Dispositif selon la revendication 6, dans le cadre duquel l'élément de liaison sous forme de siège conique est disposé centralement dans la zone de l'axe longitudinal (17) du dispositif.

13. Dispositif selon la revendication 12, dans le cadre duquel le dispositif de basculement (36) comprend deux fils, ces deux fils étant disposés décalés de 90° l'un par rapport à l'autre sur un cercle autour de l'axe longitudinal, et un ressort étant associé à chacun des fils et disposé par rapport à l'axe longitudinal sur le cercle à l'opposé du fil associé.

14. Dispositif selon la revendication 13, dans le cadre duquel le ressort associé à un fil agit selon le même rapport de levier sur le côté opposé au fil, à l'encontre de celui-ci.

15. Dispositif selon la revendication 12, dans le cadre duquel le dispositif de basculement (36) comprend quatre fils qui sont répartis à équidistance sur un cercle autour de l'axe longitudinal du dispositif.

16. Dispositif selon la revendication 14, dans le cadre duquel deux fils opposés, qui travaillent de manière antagonique, sont reliés l'un à l'autre comme levier, selon le même rapport de levier, par l'intermédiaire de l'élément de liaison sous forme de siège conique disposé centralement et formant pivot.
